# EUROPEAN PATENT APPLICATION

(11) **EP 1 998 574 A2**
(43) Date of publication of application: **03.12.2008**
(21) Application number: 08102086.9
(22) Date of filing: 27.02.2008
(51) Int. Cl.: H04Q 7/00

(54) **Systems and methods for controlling a vehicle mobile communication system**

(30) Priority: 28.02.2007 US 903880 P; 07.05.2007 US 797747
(71) Applicant: AeroMobile, Ltd., Gatwick Road Crawley West Sussex RH10 9AY (GB)
(72) Inventor: Bourgault, Tanguy L., Crawley, West Sussex, RH10 7 HR (GB)
(74) Representative: Skone James, Robert Edmund

(57) **Abstract**

Disclosed systems and methods automatically control a vehicle mobile communication system that is usable to facilitate communication external to a vehicle from one or more portable communication units with which the vehicle communication system is in communication. Disclosed systems and methods incorporate devices and/or steps for measuring (S1100) a geographic position of a vehicle, including altitude (S1200); referencing (S1300) information stored in a database regarding areas in the vicinity of a plurality of geographic reference points at which output from the vehicle mobile communication system may interfere with a fixed ground-based communication system, particularly an averaged altitude; comparing (S1400) the geographic position of the vehicle with the stored information and determining (S1500) that output from the vehicle mobile communication system should be modified and automatically disabling/re-enabling (S1700) the vehicle mobile communication system based on this determination.

## Description

### BACKGROUND

This disclosure is directed to systems and methods for automatically disabling and re-enabling a vehicle mobile communication system based on a referenced geographic position of the vehicle.

With the proliferation of communications capabilities to any manner of portable personal electronic communication device, vehicle mobile communication systems have been developed to be mounted in, for example, aircraft, to facilitate connectivity from the vehicle when it is outside the range of a fixed ground-based communication system that may separately support connectivity with the portable personal electric communication devices. One such vehicle mobile communication system configured to be installed in aircraft is the ARINC, Inc. proprietary AeroMobile^{™} communication system.

Such vehicle mobile communication systems are particularly well adapted to being installed in aircraft based on the possibility that aircraft will operate at altitudes which preclude connectivity with the fixed ground-based communication systems, or alternatively because air travel may span non-overlapping areas of coverage between such systems such as, for example, across international borders, or over open ocean.

Unlike with fixed ground-based communication systems, the fact that a vehicle mobile communication system mounted in, for example, an aircraft, is by design mobile, results in the undesirable effect that interference may occur between such a vehicle mobile communication system and one or more fixed ground-based communication systems when the vehicle is operated in certain geographic proximity to such systems.

### SUMMARY

With increased use of portable personal electronic communication devices, and vehicle mobile communication systems to support such devices, particularly in aircraft, the potential for interference such as that discussed above increases. Because many of these systems fixed and mobile are associated with proprietary capabilities of specific businesses, and revenues are generated from their use, it may be advantageous to limit such interference. Further, it can be anticipated that, in view of any real issues arising from possible interference, regulatory schemes may be put in place to attempt to manage the possibilities of such interference.

Burden for compliance in any scheme will likely be placed on operation of the vehicle mobile communication system. This burden may then translate to an operator of the vehicle to manually oversee operation of the vehicle mobile communication system to avoid interference. This burden would be significant. Based on penalties that may be associated with causing such interference, non-compliance, i.e., operating the system regardless of geographic location, is not an option. It would be advantageous, particularly in view of the above to provide a system and method whereby when a vehicle is being operated in the vicinity of a fixed ground-based communication system, and the proximity of the vehicle to that system may cause interference, to provide a capability by which the vehicle mobile communication system could be automatically disabled.

In applications particularly where a vehicle mobile communication system is installed in an aircraft, and therefore altitude of the aircraft above a fixed ground-based mobile communication system may be an issue, providing a geographic information reference database that includes information regarding the possibility of interference with fixed ground-based mobile communication systems referenced to a plurality of geographic reference points, altitudes for those reference points measured against a standard, and altitudes above those reference points at which interference may or may not occur, would prove advantageous.

It should be appreciated that an ability of a system such as that discussed briefly above to reference appropriately complete stored geographic reference information rather than to rely on, for example, measuring, in real time, vertical range (above-ground-level altitude) above the terrain, would be advantageous in significantly reducing required onboard processing capabilities necessary to support a control function of the vehicle mobile communication system as is briefly discussed above and set forth in greater detail below. Another advantage of a system and method that references a stored database for geographic reference point and/or altitude deconfliction to limit interference is that such a system and method may be advantageously employed to (1) predict a position of the vehicle at an appropriate elapsed period of time in the future when the system should be disabled based on a projection of the vehicle's geographic location and/or altitude at the end of the elapsed time period, and therefore service interruption, and/or (2) lessen the number of system cycles that may occur solely on the basis of a measured input. The predictive capability mentioned above, not available in a system that measures for example present position and AGL altitude, could further advantageously provide some warning to pending system disabling based on a comparison with projected information regarding vehicle position or altitude.

In various exemplary embodiments, disclosed systems and methods may provide a capability for controlling a vehicle mobile communication system to disable the vehicle mobile communication system automatically based on an internal determination regarding proximity to a fixed ground-based mobile communication system with which the vehicle mobile communication system may interfere by reference to a stored geographic database.

In various exemplary embodiments, disclosed systems and methods may measure at least one of vehicle geographic position or vehicle altitude. The measured parameter may be compared to data regarding a plurality of geographic reference points in a stored database of geographic reference information. Such a database may include information regarding the plurality of geographic reference points, further including the height of the terrain above a standard for the plurality of geographic reference points, in at least a specific geographic region within which the vehicle mobile communication system is intended to operate. The database may further include information that is modified to provide a baseline of information regarding altitudes at which, with reference to a specific geographic reference point and/or based on a height of the terrain above a standard, interference with such fixed ground-based communication systems may have been predetermined not to occur.

In various exemplary embodiments, disclosed systems and methods may include at least one data storage unit that stores a geographic information system database of terrain altitudes for a plurality of geographic reference points worldwide, and such altitude information as may be modified to account for interference bubbles between conflicting vehicle mobile communication systems and fixed ground-based communication systems.

In various exemplary embodiments, disclosed systems and methods may provide an ability to input data regarding local regulatory schemes designed to avoid interference between conflicting vehicle mobile communication systems and fixed ground-based mobile communication systems. Such information, when available and input, may further modify the databases to incorporate this information into baseline of information pertaining to potential interference between the systems that may be used by the system for comparison and determination whether the system should be disabled.

In various exemplary embodiments all altitudes, including the height of the terrain and altitude information regarding interference possibilities, may be referenced to a local standard.

In various exemplary embodiments, an altitude comparison may include an averaging of altitude information regarding a plurality of geographic reference points in the geographic vicinity of the vehicle. Disclosed systems and methods may further support such comparison by providing a modified geographic database that includes altitude information averaged over a coverage area for the vehicle mobile communication system below the vehicle. One technique by which the database may be modified to provide average altitudes within a certain coverage area is by applying Gaussian smoothing to the altitude information. Application of such a technique or other graphical processing technique may facilitate the ability to display averaged altitude information as, for example, a bitmap altitude picture. In this regard, a displayed bitmap altitude picture may display a pixel at a certain intensity level where an x-position of the pixel corresponds to a longitude of the pixel geographic position and a y-position of the pixel corresponds to a latitude of the pixel geographic position. These graphical processing techniques may be applied to an altitude portion of a database prior to a modified database being loaded into the vehicle system.

In various exemplary embodiments, disclosed systems and methods may provide an ability to project at least one of a vehicle geographic position or a vehicle altitude to predict a position of the vehicle when a predetermined and/or preset time interval elapses some time in the future. Reference may then be made to information stored in the database regarding ranges and/or altitudes in the vicinity of the projected geographic position to determine that, at the expiration of the predetermined time interval, disabling of the vehicle mobile communication system will, or at least should, occur. This capability would facilitate providing some manner of warning via, for example, a system warning device, or otherwise, to users of portable communication units that system operation may soon be disabled and service interrupted.

It should be appreciated that although this discussion is primarily focused on vehicle mobile communication systems that may be installed in aircraft, the systems and methods according to this disclosure are not limited to such implementations. Rather, disclosed systems and methods may find application in any scenario in which a vehicle mobile communication system that facilitates communication external to a vehicle from one or more portable communication units may interfere with, for example, fixed ground-based, communication systems, and that a capability whereby, based on a range to such a fixed system, automatic disabling of the mobile system may prove advantageous.

These and other features and advantages of disclosed systems and methods are described in, or apparent from, the following detailed description of various exemplary embodiments.

### BRIEF DESCRIPTION OF THE DRAWINGS

Various exemplary embodiments of disclosed systems and methods will be described, in detail, with reference to the following figures, wherein:

Fig. 1 illustrates an exemplary environment within which systems and methods according to this disclosure may be incorporated;

Fig. 2 illustrates a block diagram of an exemplary embodiment of a system for automatically controlling a vehicle mobile communication system according to this disclosure; and

Fig. 3 illustrates a flowchart of a method for automatically controlling a vehicle communication system according to systems and methods of this disclosure.

### DETAILED DESCRIPTION OF EMBODIMENTS

The following description of various exemplary embodiments of disclosed systems and methods will describe an exemplary system for controlling a vehicle mobile communication system, in which the vehicle mobile communication system is designed to facilitate communication external to the vehicle from one or more portable communication units with which the vehicle mobile communication system is in at least one of wired, wireless or infrared communication. The one or more portable communication units may include, but not be limited to a cellular telephone, a portable digital assistant, a notebook computer, or an Electronic Flight Bag. Disclosed systems and methods incorporate devices and/or steps for measuring a geographic position of a vehicle; referencing information stored in a database regarding areas in the vicinity of a plurality of geographic reference points at which output from a vehicle mobile communication system may interfere with a fixed ground-based communication system; comparing the geographic position of the vehicle with the stored information; determining that output from the vehicle mobile communication system should be disabled based on the possibility of interference; and automatically disabling the vehicle mobile communication system based on the determination. Further, reference may be made to the ability of systems and methods according to this disclosure to predict a position of the vehicle in order to provide some measure of warning to users of the one or more portable communication units that the system may be subject to being disabled when a predetermined time interval elapses as an indication that individual communications capabilities from one or more portable communication units may be interrupted.

In the following discussion, specific reference may be made to inclusion of such a system and/or method in installation in an aircraft. Systems and methods according to this disclosure are not intended to be limited to only such applications, however. Disclosed systems and methods may find application in any situation in which deconfliction may be effected between differing communication systems particularly between a mobile communication system and a fixed ground-based communication system by disabling the mobile communication system based on comparison of a geographic position of the mobile communication system with information stored in a database regarding the potential for interference between the mobile communication system and one or more fixed communications systems. This is particularly true regarding altitude of an aircraft, with a vehicle mobile communication system installed, above a fixed ground-based communication system.

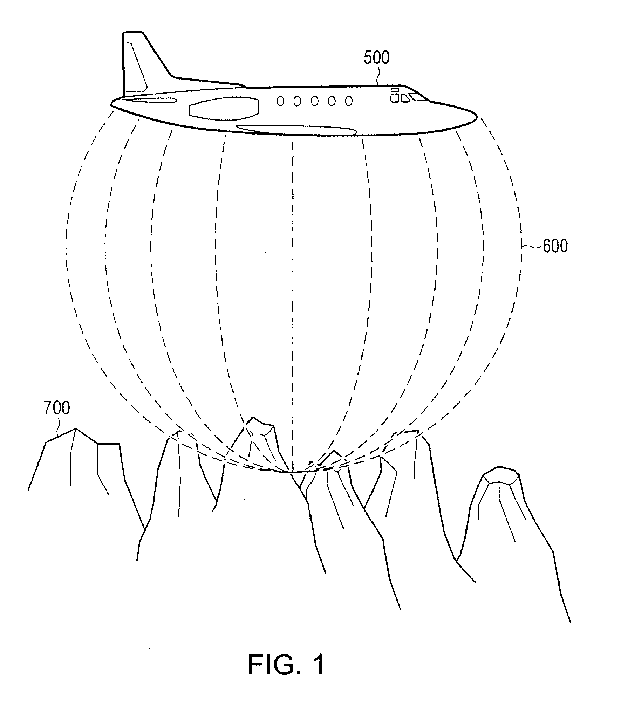

Fig. 1 illustrates an exemplary environment within which systems and methods according to this disclosure may be operated.

As shown in Fig. 1, an aircraft 500 may be operating at an altitude above, for example, mountainous terrain 700. With a vehicle mobile communication system to facilitate communication between one or more portable communication units and at least one remote receiving node installed, and enabled, there will be a predictable envelope 600 around the aircraft, simplified in the exemplary embodiment depicted in Fig. 1 to be shown only as an exemplary bubble under the aircraft. This operating envelope of the vehicle mobile communication system may interfere with operation of a fixed ground-based communication system that otherwise facilitates communication with one or more portable communication units. In order to avoid such interference, the vehicle mobile communication system could be manually disabled and/or re-enabled, based on some information scheme that may be provided in, for example, a database of geographic reference information on potential for such interference. Such manual operation, however, may prove intensely laborious to, for example, a flight crew in an aircraft, with the results being that the system may not be disabled when it should be, or otherwise not re-enabled when it need not be disabled. An exemplary automated system and/or method for accomplishing this task is advantageously proposed by systems and method according to this disclosure.

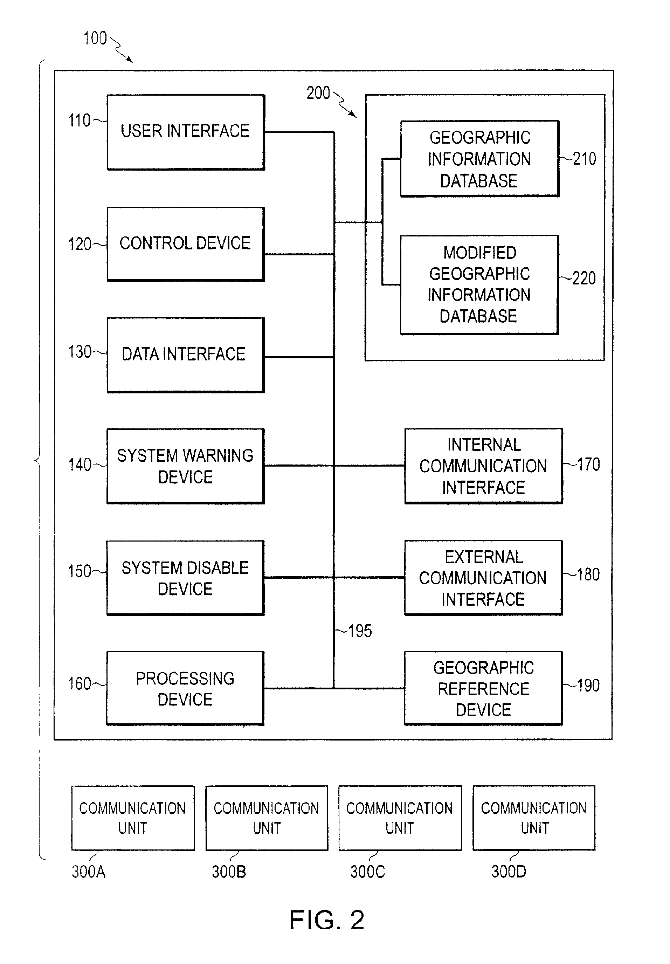

Fig. 2 illustrates a block diagram of an exemplary embodiment of a system for automatically controlling a vehicle mobile communication system according to this disclosure. As shown in Fig. 2, a system for automatically controlling a vehicle mobile communication system 100 may include a user interface 110, control device 120, data interface 130, system warning device 140, system disable device 150, processing device 160, internal communication interface 170, external communication interface 180, a geographic reference device 190, and at least one data storage unit 200 usable to store at least one of a geographic information system database 210 or a modified geographic information system database 220, the individual units and/or devices being interconnected by one or more data/ control buses 195.

It should be appreciated that although depicted as separate individual elements, any of the depicted individual units and/or devices may be combinable with other individual units and/or devices as combined units and/or devices within the exemplary vehicle mobile communication system 100. Further, while envisioned as a hard-wired data/control bus 195, any data communication path by which data and control inputs may be exchanged between individual units and/or devices, and/or combination units and/or devices, within the exemplary vehicle mobile communication system 100 is envisioned. Such data communications paths may include individual wired and/or wireless and/or optical communications connections, or any combinations of such connections between communicating elements. Additionally, one or more of the depicted individual elements and/or combination units or devices, as discussed above, may be located external to, and otherwise in data communication with, the exemplary vehicle mobile communication system 100.

In various exemplary embodiments, one or more individual portable communication units 300A-D may be in communication with the exemplary vehicle mobile communication system 100 via, for example, an internal communication interface 170 that facilitates communication between individual portable communication units 300A-D and the vehicle mobile communication system 100. The one or more portable communication units 300 A-D may include, but not be limited to a cellular telephone, a portable digital assistant, a notebook computer, or an Electronic Flight Bag. Communication external to the vehicle within which the exemplary vehicle mobile communication system 100 is installed may then be facilitated via, for example, one or more external communication interfaces 180.

In various exemplary embodiments, a user interface 110, when included, may afford a user an opportunity to directly communicate with the vehicle mobile communication system 100, or any of the individually identified units or devices, in order to, for example, input information to, or extract data from, or otherwise control, modify, or update the vehicle mobile communication system 100, or any of the individually identified units or devices.

In various exemplary embodiments, elements within, or in communication with, the vehicle mobile communication system 100 may substantially continuously, or otherwise at discrete intervals, measure a geographic position of the vehicle. Such measurement may be facilitated by employing a geographic reference device 190 internal to the vehicle mobile communication system 100. Alternatively, geographic position measurement may be facilitated by receiving information via, for example, a data interface 130, or otherwise, from other geographic reference systems installed within the vehicle.
These other systems may include, but should not be considered limited to a global positioning satellite (GPS) system transceiver that receives and processes information from the global positioning satellite constellation, an inertial navigation system within the vehicle that internally generates and updates a geographic position of the vehicle based on a known starting position, or any other like device. Additionally, a vertical reference, e.g., altitude, may also be measured either internally via the geographic reference device 190, or via information received otherwise from the vehicle, when the vehicle is an aircraft, via the data interface 130 to the vehicle mobile communication system 100 or otherwise. Processing of, for example, geographic reference information, it should be appreciated, may occur internal to the vehicle mobile communication system 100 via, for example, a geographic reference device 190, or may occur external to the vehicle mobile communication system 100, and be input to the vehicle mobile communication system 100 from another source via a data interface 130, or may occur through some combination of inputs between such devices and/or capabilities.

In various exemplary embodiments, geographic reference information obtained by the vehicle mobile communication system 100, by any means discussed above, may provide one input to a processing device 160. The processing device 160 may use input, or otherwise obtained, geographic reference information, including altitude where appropriate, to query one or more databases stored in at least one data storage device 200 to determine information regarding one of a plurality of geographic reference points in the vicinity of the vehicle. Specifically, the processing device 160 may compare, for example, geographic reference and/or altitude information with information stored in a geographic information database 210 or a modified geographic information database 220 stored in the at least one data storage device 200. This comparison may be undertaken, for example, to determine whether the vehicle mobile communication system 100 should be disabled based on a comparison of the geographic reference information provided and a determination that a likelihood exists that the vehicle mobile communication system 100 will interfere with other communication systems, information for which are stored in the database. In various exemplary embodiments, the geographic reference comparison may include an averaging of information regarding a plurality of geographic reference points in the vicinity of the vehicle.

In various exemplary embodiments, the vehicle mobile communication system 100 may include information regarding a plurality of geographic reference points stored in the at least one data storage device 200 at least one of a geographic information system database 210 or a modified geographic information system database 220. The geographic information database 210 may include information regarding a height of terrain above a standard associated with a plurality of geographic reference points in at least a specific geographic region within which the vehicle mobile communication system 100 is intended to operate. The modified geographic information system database 220 may include information regarding a height of terrain above a standard further modified to include a clearance above the height of terrain that has previously been determined to provide enough clearance to reduce, eliminate, or otherwise avoid, interference with, for example, fixed ground-based communication systems, information for which is stored in the database, and is associated with the plurality of geographic reference points included in the database. The modified geographic information system database 220 may alternatively, otherwise, or additionally include information regarding ranges from the plurality of geographic reference points where a local regulatory scheme is imposed in an attempt to avoid interference between fixed ground-based communication systems and vehicle mobile communication systems. The modified geographic information system database 220 may alternatively, otherwise, or additionally include an altitude map averaged over a coverage area for the vehicle mobile communication system below the vehicle.

It should be appreciated that one technique by which the modified geographic information system database 220 may be modified to provide average altitudes within a certain coverage area is by applying Gaussian smoothing to the altitude information. Application of such a technique, or other graphical processing technique, may facilitate the ability to display averaged altitude information as, for example, a bitmap altitude picture. In this regard, a displayed bitmap altitude picture may display a pixel at a certain intensity level where an x-position of the pixel corresponds to a longitude of the pixel geographic position and a y-position of the pixel corresponds to a latitude of the pixel geographic position. These graphical processing techniques may be applied to an altitude portion of the modified geographic information system database 220 prior to the database being loaded into the data storage device 200.

It should be appreciated that the at least one data storage device 200 may also be available to store any manner of system information, system control information, recorded information regarding system operation and/or data input to, or to be output from, the system, or any other manner of information which may be available to a user, for example, via a user interface 110, or a data interface 130, for real-time analysis, post operation analysis, or to any other purpose for which such information could be beneficially stored.

In various exemplary embodiments, the processing device 160 may make a determination based on a comparison between information regarding the measured geographic reference position of the vehicle mobile communication system 100 with the information stored in at least one of the geographic information system database 210 or the modified geographical information system database 220, respectively when available. This comparison may be used to determine the potential for interference of the vehicle mobile communication system 100 directly with one or more fixed ground-based communication systems, or with a regulatory scheme that is intended to avoid such interference.

In various exemplary embodiments, based on the above determination, a system disable device 150 may be activated to disable communication from the one or more portable communication units 300A-D with which the vehicle mobile communication system 100 is in internal communication to any external receiving node via the vehicle mobile communication system 100. Such disabling may occur by, for example, the system disable device 150 opening, or otherwise rendering unusable, a communication path by cutting off input to the vehicle mobile communication system 100 via the internal communication interface 170, cutting off external communication from the vehicle mobile communication system 100 to remote receiving nodes via the external communication interface 180, or otherwise, by any means by which the system may be programmed, such as, for example, by sending a signal to the control device 120 to temporarily power down, or otherwise turn off, the vehicle mobile communication system 100.

In various exemplary embodiments, information regarding system processing, control, disabling determination and/or system disabling may be provided to a user via the user interface 110.

In various exemplary embodiments, the vehicle mobile communication system 100 may include a capability by which, for example, the processing device 160 may automatically choose a predetermined time interval, or may be provided a predetermined time interval, for example, by a user via the user interface 110, in order to provide a predictive capability for when the vehicle mobile communication system 100 may be disabled by the system disable device 150, as discussed above. In such an instance, a geographic position may be predicted for the vehicle when a predetermined time interval is projected to have elapsed. The processing device 160 may then reference the information stored in the at least one of the geographic information system database 210 or the modified geographic information system database 220 to determine whether, upon the time interval having elapsed, the system disable device 150 should activate to disable the vehicle mobile communication system 100 to avoid external interference, as discussed above. A system warning device 140 may be provided to, for example, provide a warning message to the one or more portable communication units 300A-D with which the vehicle mobile communication system 100 is in contact, or via the user interface 110, when provided, that the vehicle mobile communication system 100 will be disabled when the predetermined time interval has elapsed.

It should be appreciated that the processing device 160 and the at least one data storage unit 200 may provide sufficient data storage and processing capacity to facilitate the inclusion of additional features and/or functionalities to be implemented within the vehicle mobile communication system 100. Software applications to facilitate, for example, such other functionalities may be pre-stored within the vehicle mobile communication system 100, or communicated to the vehicle mobile communication system 100 via the data interface 130, or otherwise.

Any data storage contemplated for various exemplary embodiments of the disclosed system may be implemented using any appropriate combination of alterable memory or fixed memory. The alterable memory, whether volatile or non-volatile, may be implemented using any one or more of static or dynamic RAM, a miniaturized internal disk drive with associated disk-type medium, a hard drive, a flash memory or any other like memory medium and/or device. Similarly, fixed memory can be implemented using any one or more of ROM, PROM, EPROM, EEPROM, or compatible internal disk drive, or any other like memory storage medium and/or device.

It should be appreciated that given the required inputs, the processing outlined above to be undertaken in exemplary manner by the processing device 160, may be implemented through software algorithms, hardware or firmware circuits, or any combination of software, hardware, and/or firmware control and/or processing elements. This is particularly true regarding implementation of processing for the comparison step between one or more databases stored in the at least one data storage device 200 and information regarding a geographic reference of the system internally generated by, or otherwise input to, the vehicle mobile communication system 100 by any means, as discussed above.

It should be further appreciated that, although depicted as a system and/or subsystem internal to the vehicle mobile communication system 100, the above-described functionalities for storing informational databases; measuring geographic reference positions of a vehicle, in three dimensions if appropriate; executing a comparison of the measured information with the stored information; providing a determination based on that comparison; and/or executing control of the exemplary vehicle mobile communication system 100 may occur with the applicable systems not being internal to and/or in any manner integral to the vehicle mobile communication system 100. Rather, each of the described functionalities of a user interface 110, control device 120, data interface 130, system warning device 140, system disable device 150, processing device 160, geographic reference device 190, and/or the inclusion of at least one data storage device 200 may be implemented as one or more external devices to the exemplary vehicle mobile communication system 100. It should be appreciated that each of the one or more devices and/or units, and the exemplary capabilities described as being associated with each of the one or more devices and/or units, may be implemented through any manner of data exchange and communication with the exemplary vehicle mobile communication system 100.

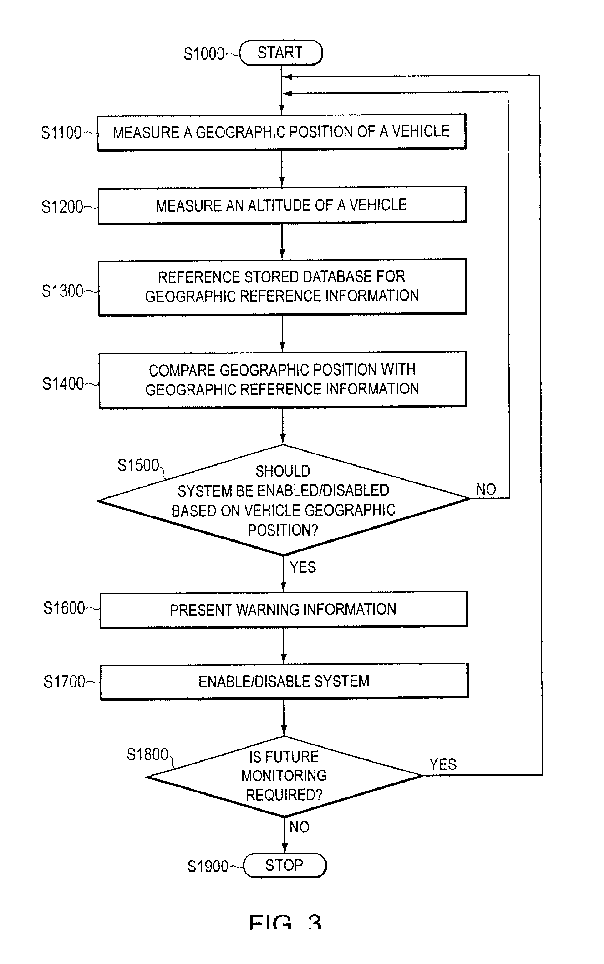

Fig. 3 illustrates a flowchart of a method for automatically controlling a vehicle communication system according to systems and methods of this disclosure.

As shown in Fig. 3, operation of the method begins at step S1000 and continues to step S1100 where a geographic position of the vehicle is measured. It should be appreciated that such geographic position may be measured by a device internal to a vehicle communication system, such as that described above, or measurement of a vehicle geographic position may be input to a vehicle mobile communication system from an external source otherwise located within the vehicle, or communicating via one or more systems within the vehicle. External sources may include, for example, devices and/or systems that localize a geographic position of a vehicle through communication with the constellation of global positioning satellites (GPS), an internal inertial navigation system, or other such like capabilities. Virtually any capability with which a geographic position of a vehicle may be measured, the measurement converted to data usable by vehicle systems and input to a vehicle mobile communication system or vehicle mobile communication control subsystem by, for example, a data interface between an external device and the vehicle mobile communication system is contemplated. Operation of the method continues to step S1300, or optionally to step S 1200.

In optional step S 1200, a vehicle geographic position may be further determined in three dimensions, for example, by determining a vehicle altitude should such information be deemed necessary or appropriate for later comparison to a stored database of geographic information. Operation of the method continues to step S1300.

In step S1300, reference is made to information stored in the database regarding a plurality of geographic reference points in the vicinity of the measured geographic position at which output from a vehicle mobile communication system may interfere with ground-based communication systems. This database may include information such as is described in paragraphs [0031] - [0033] above. Operation of the method continues to step S1400.

In step S1400, the measured geographic position of the vehicle is compared with geographic reference information obtained from the database. Operation of the method continues to determination step S1500.

In determination step S1500, a determination is made whether output from a vehicle mobile communication system should be modified, i.e., disabled if enabled, or re-enabled if disabled, based on a comparison of the measured vehicle geographic position with referenced geographic reference information. This determination may include reference to altitude of the vehicle when measured and/or required.

If, in step S 1500, a determination is made that system operation need not be modified based on the measured geographic position of the vehicle, operation of the method returns to step S1100 where further measurement of the vehicle geographic position is undertaken in real time.

If, in step S1500, a determination is made that system operation should be modified based on the measured geographic position of the vehicle, operation of the method continues to step S1700, or to optional step S1600.

In optional step S1600, based, for example, on a predictive capability to the measurement of the vehicle geographic position in the comparison and determination steps, adequate time may be preset to allow for presentation of warning information regarding a pending modification of the operation of the vehicle mobile communication system. Such a warning message may, for example, include providing, via a user interface associated with the vehicle mobile communication system an aural and/or textual warning message, and/or otherwise providing such a warning message to one or more portable communication units communicating with the vehicle mobile communication system. The warning, when provided, may alert system users and portable communication unit users that system interruption may soon occur. Operation of the method continues to step S 1700.

In step S1700, based on the above determination, a vehicle mobile communication system may be automatically disabled, or alternatively if in a disabled mode based on previous determinations, may be re-enabled. Re-enabling the system may be undertaken, for example, when the comparison of the vehicle geographic position with geographic reference information results in a determination that system operation should be modified to enable the system because the potential for interference with, for example, a fixed ground-based mobile communication system has passed.

It should be appreciated that disabling and/or re-enabling a vehicle mobile communication system automatically in the manner suggested above may be undertaken by any conventionally known method by which data communication to and/or from a communication interface or within a system itself may be interrupted.

Operation of the method continues to determination step S 1800.

In determination step S 1800, a determination is made whether method processing should continue.

If, in determination step S 1800, a determination is made that such processing should continue, operation of the method returns to step S1100 where further measurement of the vehicle geographic position is undertaken in real time.

If, in determination step S 1800, a determination is made that no further processing is necessary, operation of the method continues to step S 1900 where operation of the method ceases.

While exemplary embodiments have been described above for the disclosed systems and methods, the exemplary embodiments and variations thereof should be viewed as illustrative, and not limiting. Various modifications, substitutes, or the like may be possible to implement the systems and methods according to this disclosure and such variations are reasonably contemplated by reference to the above discussed exemplary embodiments.

## Claims

1. A method for automatically controlling a vehicle mobile communication system that facilitates communication external to the vehicle from one or more portable communication units communicating with the vehicle mobile communication system, the method comprising:
measuring a geographic position of the vehicle;
referencing information stored in a database regarding at least one of a plurality of geographic reference points in the vicinity of the measured geographic position of the vehicle, information associated with each of the plurality of geographic reference points stored in the database including at least a range from each geographic reference point at which output from the vehicle mobile communication system interferes with at least one other communication system;
comparing the measured geographic position of the vehicle with the referenced geographic reference information;
determining that output from the vehicle mobile communication system should be disabled based on the comparison; and
disabling the vehicle mobile communication system automatically based on the determination,
wherein the stored database includes altitude information averaged over a coverage area for the vehicle mobile communication system.

2. The method of claim 1, wherein the averaging includes applying at least one of Gaussian smoothing or other graphical processing techniques to the altitude information.

3. The method of claim 1 or claim 2, further comprising:
measuring an altitude of the vehicle; and
comparing the measured vehicle altitude to referenced geographic information,
wherein the information associated with each of the plurality of geographic reference points stored in the database further includes at least an altitude above each geographic reference point at which output from the vehicle mobile communication system is predetermined not to substantially interfere with at least one other communication system.

4. The method of any of the preceding claims, wherein the stored database also includes information regarding the height of the terrain above a standard modified to include a clearance above the height of the terrain that will avoid interference with ground-based communications systems.

5. The method of any of the preceding claims, wherein the stored database also includes information regarding the height of the terrain above a standard modified to include a clearance above the height of the terrain that is imposed by a local regulatory scheme designed to avoid interference between ground-based communications systems and vehicle mobile communications systems.

6. The method of any of the preceding claims, wherein the altitude information is presented as a bitmap altitude picture that includes a level of a pixel corresponding to an altitude, an x-position of the pixel corresponding to a longitude of the pixel geographic position, and a y-position of the pixel corresponding to a latitude of the pixel geographic position.

7. The method of any of the preceding claims, further comprising:
projecting a geographic position for a vehicle when a predetermined time interval is projected to elapse;
referencing information stored in a database regarding at least one of a plurality of geographic reference points in the vicinity of the projected geographic position of the vehicle at which output from a mobile communication system should be disabled to avoid interference with ground-based communication systems; and
providing a warning message to one or more portable communication units communicating with the vehicle mobile communication system that the system will be disabled when the predetermined time interval has elapsed.

8. The method of any of the preceding claims, further comprising re-enabling the vehicle mobile communication system based on a determination that output from the vehicle mobile communication system need no longer be disabled based on the comparison.

9. The method of any of the preceding claims, wherein at least one of the one or more portable communication units is at least one of a cellular telephone, a portable digital assistant, a notebook computer, or an Electronic Flight Bag.

10. A control system for automatically controlling a vehicle mobile communication system, the vehicle mobile communication system facilitating communication external to a vehicle from one or more portable communication units communicating with the vehicle mobile communication system, the control system comprising:
a measuring device for measuring a geographic position of a vehicle;
a control device that is usable to automatically control the operation of the vehicle mobile communication system;
at least one storage device that stores a database of information regarding a plurality of geographic reference points in at least an intended operating region of the vehicle, information associated with each of the plurality of geographic reference points stored in the database including a range from each geographic reference point at which output from the vehicle mobile communication system is predetermined to interfere with at least one other communication system;
a processing device that determines that the vehicle mobile communication system should be disabled based on a comparison of a measured geographic reference position of the vehicle and the stored information regarding at least one of the plurality of geographic reference points in the vicinity of the measured geographic reference position of the vehicle; and
a system disabling device that automatically disables the vehicle communication system based on the determination,
wherein the stored database of information regarding the plurality of geographic reference points includes altitude information averaged over a coverage area for the vehicle mobile communication system.

11. The system of claim 10, wherein the averaging includes applying at least one of Gaussian smoothing or other graphical processing techniques to the altitude information.

12. The system of claim 10 or claim 11, further comprising an altitude measuring device that measures an altitude of the vehicle,
wherein the information regarding a plurality of geographic reference points stored in the database includes an altitude above each geographic reference point at which output from the vehicle mobile communication system is predetermined not to substantially interfere with at least one other communication system, and
the processing device determines that the vehicle mobile communication system should be disabled based on a comparison of the measured altitude of the vehicle with the stored information regarding at least one of the plurality of geographic reference points in the vicinity of the measured geographic reference position of the vehicle.

13. The system of any of claims 10 to 12, wherein the information stored in the database includes information regarding the height of the terrain above a standard modified to include a clearance above the height of the terrain that will avoid interference with ground-based communications systems.

14. The system of any of claims 10 to 13, wherein the information stored in the database includes information regarding the height of the terrain above a standard modified to include a clearance above the height of the terrain that is imposed by a local regulatory scheme designed to avoid interference between ground-based communications systems and vehicle mobile communications systems.

15. The system of at least claim 11, wherein the altitude information is presented as a bitmap altitude picture that includes a level of a pixel corresponding to an altitude, an x-position of the pixel corresponding to a longitude of the pixel geographic position, and a y-position of the pixel corresponding to a latitude of the pixel geographic position.

16. The system of any of claims 10 to 15, further including a system warning device that provides a warning message to at least one of the one or more portable communication units that the system will be disabled when a predetermined time interval elapses,
wherein the processing device projects at least one of a geographic position or an altitude for the vehicle when the predetermined time interval will elapse and references information stored in the database regarding at least one of the plurality of geographic reference point in the vicinity of the projected geographic position of the vehicle at which output from the vehicle mobile communication system should be disabled to avoid interference with at least one other communication system.

17. The system of any of claims 10 to 16, wherein the system disabling device is usable to re-enable the vehicle mobile communication system based on a determination that output from the vehicle mobile communication system need no longer be disabled.

18. The system of any of claims 10 to 17, wherein at least one or more portable communication units is in communication with the vehicle mobile communication system, and is at least one of a cellular telephone, a portable digital assistant, a notebook computer, or an Electronic Flight Bag.

19. The system of any of claims 10 to 18, wherein the vehicle is an aircraft.

20. A mobile communication system incorporating the system of any of claims 10 to 18.

21. An aircraft external communication system incorporating the system of any of claims 10 to 18.

22. A storage medium on which is recorded a program for implementing the method of any of claims 1 to 9.
